# EUROPÄISCHE PATENTSCHRIFT

(11) **EP 0 849 516 B1**
(45) Veröffentlichungstag und Bekanntmachung des Hinweises auf die Patenterteilung: **06.09.2000**
(21) Anmeldenummer: 97121012.5
(22) Anmeldetag: 29.11.1997
(51) Int. Cl.: F16L 3/10, F16L 3/24

(54) **Montageelement mit einer Rohrschelle oder dergleichen Befestigungsglied**
Mounting member with a pipe clamp or a similar fastening member
Elément de montage avec collier de serrage ou élément de fixation similaire

(30) Priorität: 20.12.1996 DE 19653538
(43) Veröffentlichungstag der Anmeldung: 24.06.1998
(73) Patentinhaber: Sikla GmbH & Co. KG, 78595 Hausen o.V. (DE)
(72) Erfinder: Neuschwander, Martin, 78595 Hausen o.V. (DE)
(74) Vertreter: Schmitt, Hans, Dipl.-Ing.

(56) Entgegenhaltungen:
- DE-C- 4 328 106
- DE-C- 4 435 556
- DE-U- 29 610 473
- GB-A- 2 127 518

## Beschreibung

Die Erfindung betrifft ein Montageelement mit einem Haltefuß, der über wenigstens einen Abstandhalter mit zumindest einer Rohrschelle oder dergleichen Befestigungsglied verbunden ist, wobei der Abstandhalter aus wenigstens einem Materialstreifen gebildet ist, in welchem mindestens eine in Tragerichtung orientierte nut- oder sickenförmige Ausformung einstückig eingeformt ist.

Rohrleitungen werden gewöhnlich mit ausreichendem Abstand von Wänden, Decken und anderen Leitungen befestigt, um einen Brandschutz gewährleisten und um die im Betrieb auftretenden Beanspruchungen und Belastungen sicher auffangen zu können.

Zur Befestigung von Rohrleitungen an Stahlträgern kennt man bereits ein Montageelement der eingangs erwähnten Art, das einen als Haltefuß ausgestalteten und auf dem Stahlträger liegenden Flachstahl aufweist (vgl. Katalog "Montagetechnik" der Fa. Sikla GmbH, 78595 Hausen o.V., Ausgabe 10/94, Seite 5.1 2). Dieser flache Haltefuß ist mit einer Rohrschelle über einen Gewindestab verbunden, welcher als Abstandhalter dient. Auf den Gewindestab ist eine Spannkralle aufgeschoben, welche den Stahlträger zwischen sich und dem Haltefuß einspannt. Die Spannkralle ist als Gußteil ausgebildet, was den Herstellungsaufwand dieses vorbekannten Montageelementes nicht unwesentlich erhöht. Darüber hinaus ist das vorbekannte Montageelement gegen solche Kräfte empfindlich, die quer zur Längserstreckung des Gewindestabes einwirken und diesen verformen können.

Man kennt auch bereits ein Montageelement der eingangs erwähnten Art, das an einem trapezförmigen Abstandhalter eine Rohrschelle trägt (vgl. GB-A-21 27 518). Der Abstandhalter ist einstückig aus einem Materialstreifen hergestellt, dessen freie, nach außen abgewinkelten Enden einen Haltefuß bilden. Die in die dem Haltefuß abgewandte Richtung zueinander abgewinkelten Schenkel der Trapez form sind über einen kreisbogenförmigen Zwischensteg verbunden, an welchem die Rohrschelle befestigt ist. Zum Aussteifen sind in die Schenkel nut- oder sickenförmige Ausformungen eingeformt, die jeweils beidseits an jedem Schenkel in Tragerichtung des Abstandhalters angeordnet sind.

Da der trapezförmige Abstandhalter des vorbekannten Monageelementes einen definierten Abstand zwischen Rohrschelle und Haltefuß vorgibt, ist dessen Einsatzbereich begrenzt. Zwar sind die Schenkel des Abstandhalters jeweils beidseits durch die sicken- oder nutförmigen Ausformungen verstärkt, jedoch können diese Ausformungen in den abgewinkelten Bereichen des Abstandhalters zwischen den Haltefüßen und den benachbarten Schenkeln einerseits und zwischen den Schenkeln und dem Zwischensteg andererseits nicht fortgesetzt werden. In diesen abgewinkelten Bereichen weist der Abstandhalter des vorbekannten Montageelementes daher nur eine verminderte Stabilität auf, wodurch die Gesamttragkraft des vorbekannten Montageelementes nicht unerheblich reduziert wird.

Man hat auch bereits ein Montageelement geschaffen, dessen Haltefuß mit zumindest einer Rohrschelle über einen Abstandhalter verbunden ist, der ein ortsfestes Lagerunterteil sowie ein hierzu höhenverschiebliches Lageroberteil aufweist (vgl. DE 296 10 473 U1). Während das höhenverschiebliche Lageroberteil lediglich aus einem einfachen Materialstreifen gebildet ist, weist das ortsfeste Lagerunterteil einen Vertikalprofilsteg mit U-förmigem Horizontalquerschnitt auf, der eine seitliche Führung des Lageroberteils und dessen Sicherung gegen Kippen ermöglicht und aus zwei zueinander parallelen Schenkeln und einer die beiden Schenkel miteinander verbindenden Vertikalbasis besteht.

Der Abstandhalter des aus DE 296 10 473 U1 vorbekannten Montageelementes läßt sich somit ebenfalls auf die gewünschte Höhe einstellen, - die Stabilität dieses Montageelementes wird jedoch allein durch das lediglich streifenförmige Lageroberteil bestückt. Derweil nimmt die Stabilität des aus DE 296 10 473 U1 vorbekannten Montageelementes um so mehr ab, um so mehr das Lageroberteil über das Lagerunterteil vorstehen und der Abstandhalter auf eine größere Höhe eingestellt werden soll.

Es besteht daher die Aufgabe, ein mit geringem Aufwand herstellbares Montageelement der eingangs erwähnten Art zu schaffen, der vielseitig einsetzbar ist und hohen Belastungen Stand hält.

Die erfindungsgemäße Lösung dieser Aufgabe besteht darin, daß der Abstandhalter aus wenigstens zwei, in Tragerichtung bereichsweise überlappenden Materialstreifen gebildet ist, die jeweils mindestens eine nut- oder sickenförmige Ausformung haben, daß die Materialstreifen relativ zueinander verstellbar und ihre nut- oder sickenförmigen Ausformungen dazu als ineinandergreifende Längsführungen ausgebildet sind, und daß die Materialstreifen mittels zumindest einer Schraubverbindung miteinander verbunden sind.

Die an den sich überlappenden Materialstreifen vorgesehenen Ausformungen dienen beim Verstellen des Abstandhalters sowie bei einer Abstandsänderung als Längsschiebeführungen. Diese sicken- oder nutförmigen Ausformungen erlauben es, daß der lediglich aus zwei Materialstreifen gebildete Abstandhalter des erfindungsgemäßen Montageelementes auch hohen Belastungen Stand halten und entsprechende Biegekräfte aufnehmen kann. Damit erhöhen diese ineinandergreifenden Ausformungen gleichzeitig auch wesentlich die Quersteifigkeit und damit die Belastbarkeit des am erfindungsgemäßen Montageelements vorgesehenen Abstandhalters. Diese Ausformungen sind etwa in Tragerichtung orientiert, wobei die Tragerichtung praktisch durch die Verbindungslinie zwischen dem Haltefuß einerseits und dem Befestigungsglied andererseits festgelegt ist.

Um die Belastbarkeit des erfindungsgemäßen Montageelementes zusätzlich zu erhöhen, ist es vorteilhaft, wenn die Materialstreifen zumindest im Bereich ihrer ineinandergreifenden Ausformungen aneinander anliegen.

Das erfindungsgemäße Montageelement läßt sich besonders leicht an den gewünschten Abstand einstellen und ist gleichzeitig besonders hoch belastbar, wenn die Schraubverbindung(en) im Bereich der ineinandergreifenden Ausformungen angeordnet ist (sind).

Möglich ist beispielsweise, daß an einer der beiden ineinandergreifenden Materialstreifen zumindest eine Durchstecköffnung vorgesehen ist, die zur Abstandsveränderung mit mehreren Durchstecköffnungen am benachbarten Materialstreifen zusammenwirkt. Um jedoch eine stufenlose Abstandsänderung des erfindungsgemäßen Montageelementes zu erreichen, ist es zweckmäßig, wenn von den ineinandergreifenden Ausformungen eine erste Ausformung ein in Längsrichtung der Ausformung orientiertes Langloch hat, wenn die zweite Ausformung eine Durchstecköffnung aufweist und wenn eine Spannschraube das Langloch und die Durchstecköffnung durchsetzt. Die an dem einen Materialstreifen vorgesehene Durchstecköffnung kann somit im Bereich des am anderen Materialstreifen angeordneten Langloches in beliebiger Position positioniert und fixiert werden.

Damit die den Abstandhalter bildenden Materialstreifen ohne größeren Aufwand ineinander eingefügt werden können und fest aneinander anliegen, ist es vorteilhaft, wenn die ineinandergreifenden Ausformungen sich in Richtung nach außen verjüngen. Solche sich nach außen verjüngenden Ausformungen zentrieren sich beim Einfügen ineinander praktisch von selbst.

Nach einer bevorzugten Ausführungsform gemäß der Erfindung ist vorgesehen, daß die Ausformungen im Querschnitt die Form eines vorzugsweise gleichschenkligen Trapezes aufweisen. Der der Basis der Trapezform gegenüberliegende Ausformungsgrund kann somit in vorteilhafter Weise auch zur Befestigung der ineinandergreifenden Ausformungen dienen.

Um die hohe Belastbarkeit des erfindungsgemäßen Montageelementes zu begünstigen und um die den Abstandhalter bildenden Materialstreifen zumindest im Bereich ihrer Ausformungen praktisch vollflächig aneinander anliegen zu lassen, ist es vorteilhaft, wenn die ineinandergreifenden Ausformungen einen im wesentlichen komplementär zueinander geformten Querschnitt haben.

Nach einer Weiterbildung gemäß der Erfindung ist vorgesehen, daß die ineinandergreifenden Ausformungen mittels zumindest einer im Bereich ihrer Berühr zone angeordneten Halteprofilierung miteinander verbunden sind. Mittels dieser Halteprofilierung läßt sich ein Form- und Kraftschluß der ineinandergreifenden Materialstreifen erreichen, wodurch die Belastbarkeit des erfindungsgemäßen Montageelementes wesentlich begünstigt wird.

Dabei sieht eine besonders vorteilhafte und einfach herstellbare Ausführungsform gemäß der Erfindung vor, daß die Halteprofilierung als eine vorzugsweise quer zur Längsrichtung der Ausformung orientierte Verzahnung ausgebildet ist.

Die Halteprofilierung(en) können beispielsweise am Ausformungsgrund der ineinandergreifenden Ausformungen auf deren einander zugewandten Längsseiten angeordnet sein. Bevorzugt wird jedoch eine Ausformungsform, bei der die Halteprofilierung(en) an den jeweils den Ausformungsgrund begrenzenden Eckbereichen der ineinandergreifenden Ausformungen vorgesehen ist (sind). Eine solche Ausführungsform zeichnet sich durch eine besonders hohe Belastbarkeit des Montageelements im Bereich der ineinandergreifenden Ausformungen seiner Materialstreifen aus.

Damit die in den Eckbereichen der Ausformungen vorgesehenen Profilierungen und Gegenprofilierungen der Halteprofilierung besonders sicher und fest ineinandergreifen können, ist es vorteilhaft, wenn von den ineinandergreifenden und im Querschnitt trapezförmigen Ausformungen die Schenkel der innenliegenden Ausformung im Vergleich zur außenliegenden Ausformung steiler abgewinkelt sind.

Sofern das erfindungsgemäße Montageelement besonders hohen Belastungen und beispielsweise entsprechend schweren Rohrgewichten ausgesetzt werden soll, ist es vorteilhaft, wenn an dem Abstandhalter zumindest zwei voneinander beabstandete Rohrschellen oder dergleichen Befestigungselemente vorgesehen sind. Zusätzlich oder stattdessen kann der Abstandhalter des erfindungsgemäßen Montageelementes auch aus mehreren, gegebenenfalls paarweise ineinandergreifenden Materialstreifen gebildet werden, wobei die Materialstreifenpaare vorzugsweise voneinander beabstandet sind.

Das erfindungsgemäße Montageelement kann aus jedem geeigneten Werkstoff hergestellt werden. Besonders einfach herstellbar ist jedoch eine Ausführungsform, bei der die Materialstreifen des Abstandhalters aus einem Metallblech hergestellt sind.

Ein weiterbildender Vorschlag gemäß der Erfindung sieht vor, daß der Haltefuß des Montageelementes mittels zumindest einer Spannkralle an einem T-Träger oder dergleichen stegförmiger Unterlage befestigt ist, daß die Spannkralle einen auf der Unterlage aufliegenden Stützabschnitt hat, welcher einstückig mit einem demgegenüber abgewinkelten, die Unterlage hintergreifenden Klemmabschnitt verbunden ist, und daß zumindest eine Spannkralle aus einem Blechstreifen hergestellt ist, welcher zur Bildung des Stützabschnittes in einem eine vorspringende Blechlasche aufweisenden Mittelbereich etwa U-förmig umgebogen ist, wobei die freien, in Richtung zur Blechlasche gebogenen und dabei mit ihren benachbarten Längsrändern zueinander nach innen eingedrehten Enden des Blechstreifens den Klemmabschnitt bilden.

Gegenüber vorbekannten Spannkrallen, die meist aus Temperguß hergestellt sind, kann die Spannkralle des erfindungsgemäßen Montageelementes kostengünstig aus einem Blechstreifen hergestellt werden. Da die freien Enden dieses Blechstreifens das Klemmteil bilden und da das besonders hohen Belastungen ausgesetzte Stützteil aus dem einstückigen umgebogenen Mittelbereich des Blechstreifens hergestellt wird, hält die Spannkralle des erfindungsgemäßen Montageelementes auch hohen Belastungen stand. Im Vergleich zu bekannten Gußteilen läßt sich die aus einem Blechstreifen hergestellte Spannkralle des erfindungsgemäßen Montageelementes gut weiterverarbeiten und beispielsweise schweißen, so daß diese Spannkralle auch für ein baukastenartig aufgebautes Montagesystem verwendet werden kann.

Vorteilhaft ist es, wenn die freien Enden des die Spannkrallen bildenden Blechstreifens miteinander verschweißt, verklebt oder dergleichen miteinander verbunden sind.

Um das Montageelement beispielsweise an den Quersteg eines Stahlträgers montieren zu können, ist es vorteilhaft, wenn zumindest ein Spannkrallen-Paar vorgesehen ist, dessen Spannkrallen beidseits an der Unterlage angreifen und die mittels eines Gewindestabes, einer Spannschraube oder dergleichen Spannelement miteinander verbunden sind.

Bei Festpunktschellen, die hohe Kräfte aufnehmen und stabil und sicher am Baukörper verankert werden sollen, ist es vorteilhaft, wenn einer der Spannkrallen eines Spannkrallen-Paares mit dem Haltefuß des erfindungsgemäßen Montageelementes unverrückbar verbunden ist.

Bei Gleitschellen, welche eine Bewegung der Rohrleitungen in Achsrichtung erlauben sollen, kann es dagegen vorteilhaft sein, wenn an jeder der Spannkrallen eine Sicherungslasche vorgesehen ist und wenn der Haltefuß zwischen der Unterlage und den Sicherungslaschen der Spannkrallen vorzugsweise in Längsrichtung verschieblich gehalten sind.

Weitere Merkmale der Erfindung ergeben sich aus der nachfolgenden Beschreibung erfindungsgemäßer Ausführungsbeispiele in Verbindung mit den Ansprüchen sowie der Zeichnung. Die einzelnen Merkmale können je für sich oder zu mehreren bei einer Ausführungsform gemäß der Erfindung verwirklicht sein.

Es zeigt:
- Fig. 1: ein Montageelement mit einem flachen Haltefuß in einer Seitenansicht, wobei der Haltefuß über einen aus zwei Materialstreifen gebildeten Abstandhalter mit zwei Rohrschellen verbunden ist,
- Fig. 2: das Montageelement aus Figur 1 in einem Querschnitt durch Schnittebene II-II in Figur 1,
- Fig. 3: das in einer Vorderansicht dargestellte Montageelement aus Figur 1 und 2 in einer unteren Halteposition,
- Fig. 4: das Montageelement aus Figur 1 bis 3 in einer oberen Halteposition,
- Fig. 5: ein Montageelement, ähnlich dem aus den Figuren 1 bis 4 in einer Seitenansicht, wobei das hier als Gleitschelle ausgebildete Montageelement mittels Spannkrallen an einem Stahlträger befestigt ist,
- Fig. 6: das Montageelement aus Figur 5 in einer Vorderansicht,
- Fig. 7: ein Montageelement, ähnlich denen aus Figur 1 bis 6, wobei vom Montageelement nur der Haltefuß mit einem der Materialstreifen des Abstandhalters gezeigt ist,
- Fig. 8: das Montageelement aus Figur 7 in einem Querschnitt durch Schnittebene VIII-VIII in Figur 7,
- Fig. 9: eine Spannkralle zur Befestigung der Montageelemente gemäß den Figuren 1 bis 8 an einem Stahlträger oder dergleichen Unterlage in einer Seitenansicht,
- Fig. 10: die Spannkralle aus Figur 9 in einer Vorderansicht,
- Fig. 11: die Spannkralle aus Figur 9 und 10 in einer Unteransicht,
- Fig. 12: eine Spannkralle, ähnlich der aus Figur 9 bis 11, wobei die Spannkralle in Figur 12 eine Sicherungslasche hat, welche den Haltefuß des Montageelementes zwischen sich und der Unterlage einspannt,
- Fig. 13: ein Montageelement, ähnlich dem aus Figur 5, wobei am Haltefuß des Montageelementes ein Befestigungssteg seitlich vorsteht, der einem den Spannkrallen zugeordneten Gewindestab als Widerlager dient,
- Fig. 14: das Montageelement aus Figur 13 in einer Teil-Seitenansicht im Bereich der Spannkrallen und
- Fig. 15: das Montageelement aus Figur 13 und 14 in einer quergeschnittenen Vorderansicht.

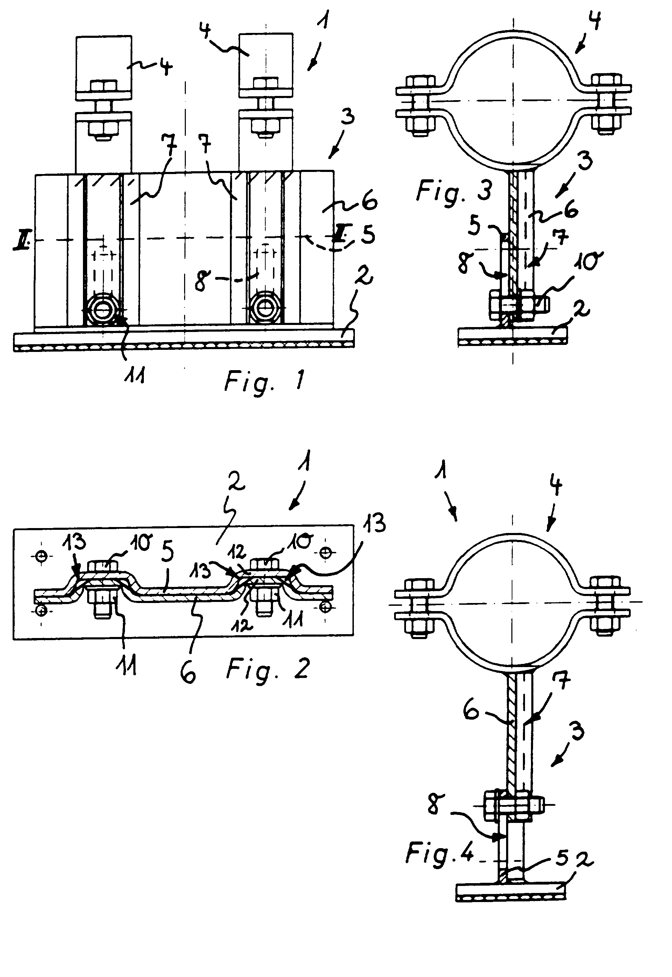

In den Figuren 1 bis 4 ist ein Montageelement 1 dargestellt, das einen aus einem Flachstahl hergestellten Haltefuß 2 hat. Der Haltefuß 2 ist über einen Abstandhalter 3 mit zwei Rohrschellen 4 verbunden, welche als Befestigungsglieder zur Montage einer Rohrleitung an einem Stahlträger dienen. Statt der Rohrschellen 4 können bei Bedarf auch andere geeignete Befestigungsglieder verwendet werden. Aus Figur 2 wird deutlich, daß der Abstandhalter 3 aus zwei Materialstreifen 5, 6 gebildet ist, von denen ein erster Materialstreifen 5 mit dem Haltefuß 2 und ein zweiter Material-streifen 6 mit den Rohrschellen 4 unlösbar verbunden ist. Die Materialstreifen 5, 6 weisen jeweils zwei sickenartige Ausformungen 7 auf, welche in die Materialstreifen 5, 6 einstückig eingeformt und in Tragerichtung des Montageelementes 1 orientiert sind.

In den Figuren 3 und 4 ist dargestellt, daß die Materialstreifen 5, 6 in Tragerichtung relativ zueinander verstellbar sind und sich bereichsweise überlappen. Dabei sind die an den Materialstreifen 5, 6 vorgesehenen Ausformungen 7 paarweise einander zugeordnet und als ineinandergreifende Längsführungen ausgebildet. Die Ausformungen 7 geben den Materialstreifen 5, 6 zusätzlich eine wesentlich höhere Biegesteifigkeit.

Aus Figur 2 wird deutlich, daß die Materialstreifen 5, 6 praktisch vollflächig aneinander anliegen. Dabei sind die Materialstreifen 5, 6 mittels einer Schraubverbindung in ihrer Abstands- oder Relativposition zueinander fixiert. Dazu ist an den Ausformungen 7 des ersten Materialstreifens 5 ein Langloch 8 vorgesehen, während die Ausformungen 7 des zweiten Materialstreifens 6 jeweils eine Durchstecköffnung 9 tragen. Die einander zugeordneten Langlöcher 8 und Durchstecköffnungen 9 werden jeweils von einer Spannschraube 10 durchsetzt, die auf ihrer dem Schraubenkopf abgewandten Seite eine Mutter 11 trägt. Wie aus einem Vergleich der Figuren 3 und 4 deutlich wird, lassen sich die Materialstreifen 5, 6 somit in der gewünschten Abstands- und Relativposition zueinander fixieren und der Abstandhalter 3 auf den benötigten Abstand einstellen.

Die ineinandergreifenden Ausformungen 7 der Materialstreifen 5, 6 sind komplementär zueinander geformt. Um die Ausformungen 7 leicht ineinander einfügen zu können, verjüngen sich diese in Richtung nach außen. Die Ausformungen 7 der Materialstreifen 5, 6 können dazu beispielsweise einen V-förmigen Querschnitt haben; in den vorliegenden Figuren weisen die Ausformungen 7 im Querschnitt jedoch etwa die Form eines gleichschenkligen Trapezes auf. Dabei bietet der der offenen Basis dieser Trapezform abgewandte Ausformungsgrund 12 jeweils eine ausreichende Fläche, um dort zumindest das Langloch 8 oder die Durchstecköffnung 9 zu plazieren.

Um die Materialstreifen 5, 6 des Abstandhalters 3 sowohl formals auch kraftschlüssig miteinander zu verbinden, sind die ineinandergreifenden Ausformungen 7 der Materialstreifen 5, 6 mittels zumindest einer im Bereich ihrer Berührzone angeordneten Halteprofilierung 13 miteinander verbunden. Diese Halteprofilierungen sind jeweils als eine quer zur Längsrichtung der Ausformungen 7 orientierte Verzahnung ausgebildet. Solche Halteprofilierungen 13 können beispielsweise am Ausformungsgrund 12 der ineinandergreifenden Ausformungen 7 auf deren einander zugewandten Längsseiten angeordnet sein.

Bevorzugt wird jedoch die hier dargestellte Ausführungsform, bei der die Halteprofilierungen 13 an den jeweils den Ausformungsgrund 12 begrenzenden Eckbereichen der ineinandergreifenden Ausformungen 7 vorgesehen sind. Um eine sichere und stabile Verzahnung der an den Ausformungen 7 vorgesehenen Profilierungen und Gegenprofilierungen, welche die Halteprofilierung 13 bilden, zu gewährleisten, sind von den ineinandergreifenden und im Querschnitt trapezförmigen Ausformungen 7 die Schenkel der innenliegenden Ausformung des Materialstreifens 6 - wie Figur 2 zeigt - im Vergleich zur außenliegenden Ausformung des Materialstreifens 5 steiler abgewinkelt, so daß die Ausformungen 7 des Materialstreifens 6 tief in die Ausformungen 7 des Materialstreifens 5 eingefügt werden können.

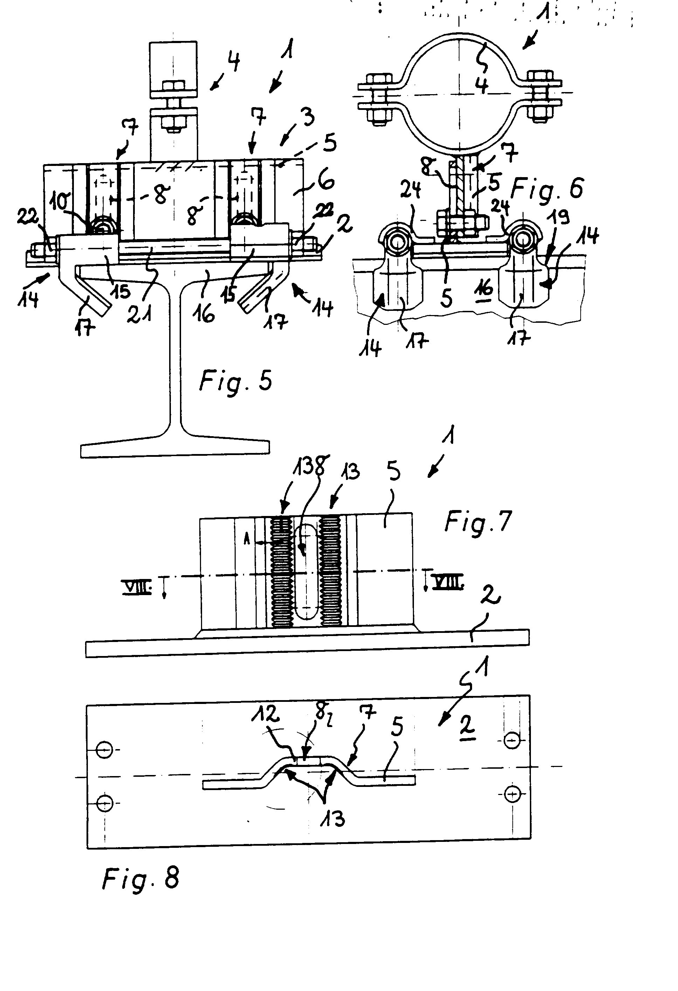

In den Figuren 7 und 8 ist ein Montageelement 1 dargestellt, das dem Montageelement 1 aus den Figuren 1 bis 4 weitgehend ähnelt. Auch der Abstandhalter 3 des Montageelementes 1 in Figur 7 ist aus zwei sich bereichsweise überlappenden Materialstreifen gebildet, von denen in Figur 7 und 8 nur der mit dem Haltefuß 2 verbundene Materialstreifen 5 dargestellt ist. Die Materialstreifen des Montageelementes 1 aus Figur 7 und 8 weisen jeweils nur eine Ausformung 7 auf, welche eine ineinandergreifende Längsführung bilden. Wie aus den Figuren 7 und 8 besonders deutlich wird, hat auch der Materialstreifen 5 des Montageelementes 1 in den seinen Ausformungsgrund begrenzenden Eckbereichen eine als Verzahnung ausgebildete Halteprofilierung 13, die quer zur Längsrichtung der Ausformung 7 orientiert ist.

Während das in den Figuren 1 bis 4 dargestellte Montageelement für besonders hohe Belastungen und schwere Rohrleitungen vorgesehen ist, kann das in den Figuren 7 und 8 dargestellte Montageelement bei geringeren Belastungen vorrangig eingesetzt werden.

Bei besonders hohen Belastungen kann es eventuell auch vorteilhaft sein, wenn die voneinander beabstandeten Rohrschellen durch zwei ebenfalls voneinander beabstandete Abstandhalter mit einem gemeinsamen Haltefuß verbunden sind.

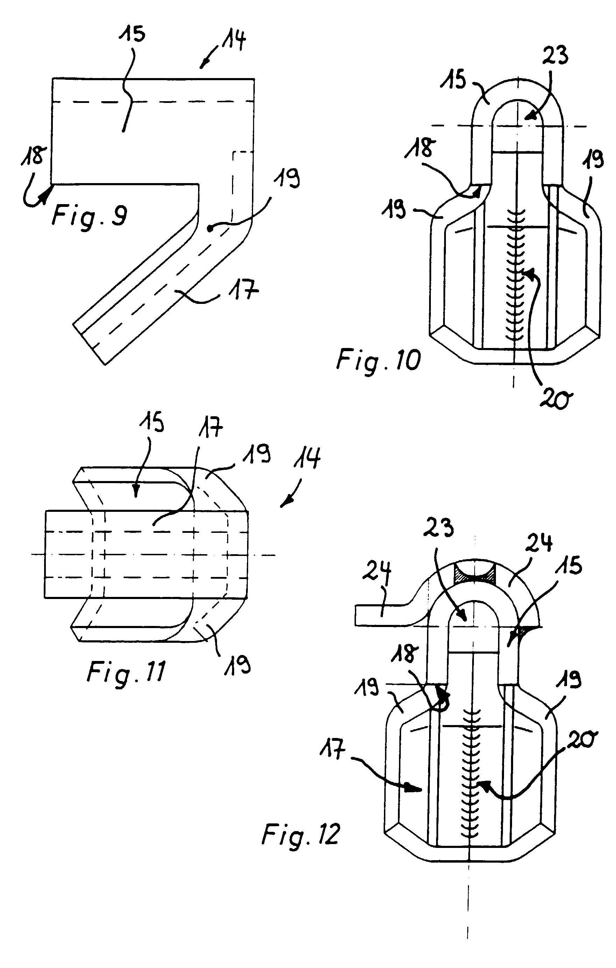

In den Figuren 5 und 6 ist ein Montageelement 1 dargestellt, das im wesentlichen mit den Montageelementen 1 aus den Figuren 1 bis 4 sowie 7 und 8 übereinstimmt. Wie aus den Figuren 5 und 6 deutlich wird, ist der Haltefuß 2 des Montageelementes 1 mittels Spannkrallen 14 an dem Quersteg eines Doppel-T-Trägers befestigt. Die in den Figuren 9 bis 12 in unterschiedlichen Ausführungen dargestellten Spannkrallen 14 weisen ein auf der Unterlage aufliegenden Stützabschnitt 15 auf, welcher einstückig mit einem demgegenüber abgewinkelten, die Unterlage 16 hintergreifenden Klemmabschnitt 17 verbunden ist.

Wie insbesondere aus den Figuren 9 bis 12 deutlich wird, sind die Spannkrallen 14 aus einem Blechstreifen hergestellt. Dieser Blechstreifen ist zur Bildung des Stützabschnittes 15 in einem eine vorspringende Blechlasche 18 aufweisenden Mittelbereich etwa U-förmig umgebogen. Dabei sind die in Richtung zur Blechlasche 18 des Stützabschnittes 15 abgewinkelten und dabei tordierten Enden dieses Blechstreifens als Klemmabschnitt ausgebildet. Beim Abwinkeln und Verdrehen der den Klemmabschnitt 17 bildenden freien Enden des Blechstreifens entsteht jeweils eine nach außen orientierte Falte 19, wobei diese Falten 19 in vergleichsweise großem Abstand an der Unterlage angreifen und den festen Halt der Spannkrallen 14 an der Unterlage 16 noch zusätzlich begünstigen. Jede der Spannkrallen 14 bildet an der Unterlage 16 somit eine Dreipunkt-Befestigung, deren Angriffsstellen durch den Stützabschnitt 15 einerseits und die als Klemmabschnitt 17 dienenden freien Enden des Blechstreifens festgelegt ist.

Wie aus den Figuren 10 bis 12 deutlich wird, sind die freien Enden derart in Richtung zueinander nach innen eingedreht und gefaltet, daß sie an ihren aneinander anliegenden Randbereichen durch eine Schweißnaht 20 miteinander verbunden werden können.

Aus den Figuren 5 und 6 wird deutlich, daß jeweils zumindest ein Spannkrallen-Paar vorgesehen ist, dessen einander zugeordneten Spannkrallen 14 beidseits an der Unterlage 16 angreifen und die mittels eines als Spannelement dienenden Gewindestabes 21 miteinander verbunden sind. Dieser Gewindestab, auf dessen freien Enden jeweils eine Spannmutter 22 aufgeschraubt ist, durchsetzt Durchstecköffnungen 23, welche sich beim U-förmigen Umbiegen des zur Herstellung der Spannkrallen 14 verwendeten Blechstreifens bilden.

Um den Haltefuß 2 an der stegförmigen Unterlage 16 befestigen zu können, kann in hier nicht dargestellter Weise eine der in den Figuren 9 bis 11 gezeigten Spannkrallen 14 mit dem Haltefuß 2 unverrückbar verbunden sein, wobei der mit dem Haltefuß 2 verbundenen Spannkralle 14 eine am gegenüberliegenden Randbereich der Unterlage 16 angreifende Spannkralle 14 zugeordnet ist und wobei diese paarweise einander zugeordneten Spannkrallen über den Gewindestab 21 oder dergleichen Spannelement miteinander verbunden sind. Dieser Gewindestab 21 erlaubt es, das Montageelement 1 auch an unterschiedlich breiten Unterlagen 16 montieren zu können.

Demgegenüber dient das in den Figuren 5 und 6 dargestellte Montageelement als Gleitschelle, welche quer zum Doppel-T-Träger verschieblich geführt ist. Dazu sind zwei, in Figur 12 näher dargestellte Spannkrallen 14 vorgesehen, die im Bereich ihres Stützabschnittes 15 jeweils eine Sicherungslasche 24 tragen. Die Sicherungslaschen der in den Figuren 5, 6 und 12 dargestellten Spannkrallen 14 weisen jeweils in Richtung zum Haltefuß, so daß der Haltefuß 2 zwischen der Unterlage 16 und den Sicherungslaschen 24 der Spannkrallen 14 verschieblich gehalten ist, während der Stützabschnitt 15 der Spannkrallen 14 seitlich mit geringfügigem Abstand vom Haltefuß 2 an der Unterlage 16 angreift.

Ebenso wie die Spannkrallen 14 sind vorzugsweise auch die Materialstreifen 5, 6 des Montageelementes 1 aus einem Metallblech hergestellt.

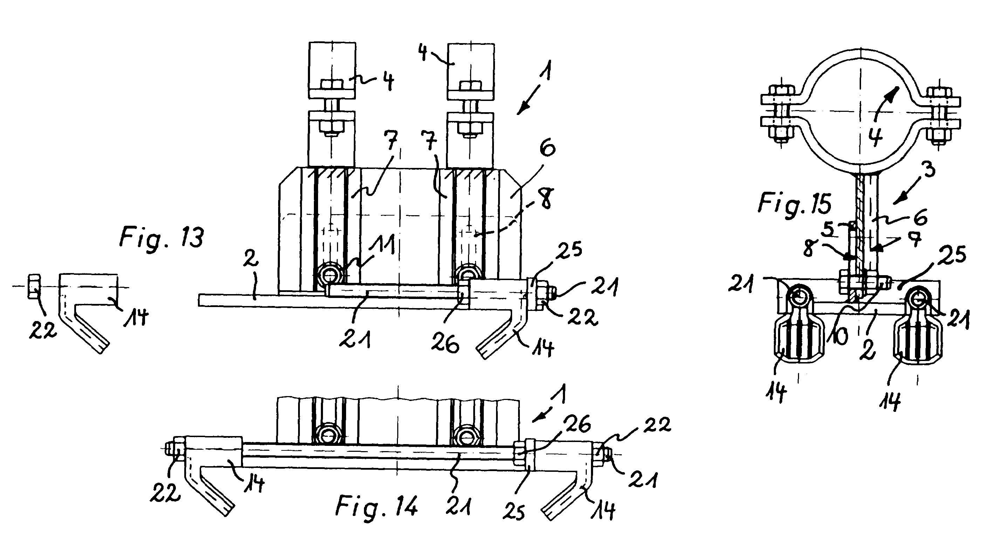

In den Figuren 13 bis 15 ist ein Montageelement 1 dargestellt, das im wesentlichen dem Montageelement 1 aus Figur 1 bis 4 entspricht. Das Montageelement 1 aus Figur 13 bis 15 weist jedoch einen Befestigungssteg 25 auf, der hier beidseits seitlich über den Haltefuß 2 übersteht. Der Befestigungssteg 25 ist quer zur Rohr-Längsachse und senkrecht auf dem plattenförmigen Haltefuß 2 mit diesem verbunden. An den über den Haltefuß 2 überstehenden Teilbereichen des Befestigungssteges 25 sind Durchstecköffnungen vorgesehen, die jeweils ein Gewindestab 21 durchsetzt. Auf jedem der Gewindestäbe 21 sind jeweils ein Paar Spannkrallen 14 vorgesehen, zwischen denen der Quersteg eines T-Trägers oder dergleichen plattenförmige Unterlage randseitig eingespannt werden kann. Zum Einspannen dieser Unterlagen sind auf den Gewindestäben 21 beidseits Spannmuttern 22 aufgeschraubt.

Der Befestigungssteg 25 dient den Gewindestäben 21 als Widerlager. Wie aus einem Vergleich der Figuren 13 und 14 deutlich wird, kann dabei die dem Befestigungssteg 25 benachbarte Spannkralle 14 rechts vom Befestigungssteg 25, zwischen der endseitigen Spannmutter 22 und dem Befestigungssteg 25 (vgl. Fig. 14) oder links vom Befestigungssteg 25, zwischen diesem und der gegenüberliegenden Spannkralle 14 (vgl. Fig. 13) angeordnet sein. Diese Anordnungen können in Abhängigkeit von der Breite der zur Verfügung stehenden Unterlage gewählt werden. Durch diese beiden Variationsmöglichkeiten in der Anordnung der dem Befestigungssteg 25 benachbarten Spannkralle 14 ist das Montageelement an plattenförmigen Unterlagen zu befestigen, die in ihrer Breite in einem großen Bereich voneinander variieren. Da insbesondere das in den Figuren 13 bis 15 dargestellte Montageelement 1 besonders vielseitig einsetzbar ist, kann die Bevorratung dieses Montageelementes 1 wesentlich vereinfacht und allenfalls auf wenige, vielseitig einsetzbare Ausführungen beschränkt werden.

Dabei ist der Befestigungssteg 25 so angeordnet, daß sich die Spannkrallen 14 stets vorzugsweise etwa mittig unterhalb des Abstandhalters 3 befinden. Um die Handhabung des Montageelementes 1 und dessen Montage zu erleichtern, kann es vorteilhaft sein, wenn die dem Befestigungssteg 25 benachbarte Spannkralle 14 über den Gewindestab 21 zwischen der endseitigen Spannmutter 22 und einer ebenfalls auf den Gewindestab 21 aufgeschraubten Befestigungsmutter 26 am Befestigungssteg 25 fest angeschraubt ist.

Die in den Figuren 1 bis 15 dargestellten Montageelemente 1, die aus baukastenartig zusammenzustellenden Einzelteilen bestehen, lassen sich mit geringem Aufwand herstellen und zeichnen sich dennoch durch eine hohe Belastbarkeit aus.

## Patentansprüche

1. Montageelement (1) mit einem Haltefuß (2), der über wenigstens einen Abstandhalter (3) mit zumindest einer Rohrschelle (4) oder dergleichen Befestigungsglied verbunden ist, wobei der Abstandhalter (3) aus wenigstens einem Materialstreifen (5, 6) gebildet ist, in den mindestens eine in Tragerichtung orientierte nut- oder sickenförmige Ausformung (7) einstückig eingeformt ist, **dadurch gekennzeichnet,** daß der Abstandhalter (3) aus wenigstens zwei, in Tragerichtung bereichsweise überlappenden Materialstreifen (5, 6) gebildet ist, die jeweils mindestens eine nut- oder sickenförmige Ausformung haben, daß die Materialstreifen (5, 6) relativ zueinander verstellbar und ihre nut- oder sickenförmigen Ausformungen (7) dazu als ineinandergreifende Längsführungen ausgebildet sind, und daß die Materialstreifen (5, 6) mittels zumindest einer Schraubverbindung miteinander verbunden sind.

2. Montageelement nach Anspruch 1, dadurch gekennzeichnet, daß die Materialstreifen (5, 6) zumindest im Bereich ihrer ineinandergreifenden Ausformungen (7) aneinander anliegen.

3. Montageelement nach Anspruch 2, dadurch gekennzeichnet, daß die Materialstreifen (5, 6) vollflächig aneinander anliegen.

4. Montageelement nach einem der Ansprüche 1 bis 3, dadurch gekennzeichnet, daß die Schraubverbindung(en) im Bereich der ineinandergreifenden Ausformungen (7) angeordnet ist (sind).

5. Montageelement nach einem der Ansprüche 1 bis 4, dadurch gekennzeichnet, daß von den ineinandergreifenden Ausformungen (7) eine erste Ausformung ein in Längsrichtung der Ausformung orientiertes Langloch (8) hat, daß die zweite Ausformung (7) eine Durchstecköffnung (9) aufweist und daß das Langloch (8) und die Durchstecköffnung (9) eine Spannschraube (10) durchsetzt.

6. Montageelement nach einem der Ansprüche 1 bis 5, dadurch gekennzeichnet, daß die Ausformungen (7) sich in Richtung nach außen verjüngen.

7. Montageelement nach einem der Ansprüche 1 bis 6, dadurch gekennzeichnet, daß die Ausformungen (7) im Querschnitt die Form eines vorzugsweise gleichschenkligen Trapezes aufweisen.

8. Montageelement nach einem der Ansprüche 1 bis 7, dadurch gekennzeichnet, daß die ineinandergreifenden Ausformungen (7) einen im wesentlichen komplementär zueinander geformten Querschnitt haben.

9. Montageelement nach einem der Ansprüche 1 bis 8, dadurch gekennzeichnet, daß die ineinandergreifenden Ausformungen (7) mittels zumindest einer im Bereich ihrer Berührzone angeordneten Halteprofilierung (13) miteinander verbunden sind.

10. Montageelement nach Anspruch 9, dadurch gekennzeichnet, daß die Halteprofilierung (13) als eine vorzugsweise quer zur Längsrichtung der Ausformungen (7) orientierte Verzahnung ausgebildet ist.

11. Montageelement nach einem der Ansprüche 9 bis 10, dadurch gekennzeichnet, daß die Halteprofilierung(en) (13) am Ausformungsgrund (12) der ineinandergreifenden Ausformungen (7) auf deren einander zugewandten Längsseiten angeordnet ist (sind).

12. Montageelement nach einem der Ansprüche 9 bis 11, dadurch gekennzeichnet, daß die Halteprofilierung(en) (13) an den jeweils den Ausformungsgrund (12) begrenzenden Eckbereichen der ineinandergreifenden Ausformungen (7) vorgesehen ist (sind).

13. Montageelement nach einem der Ansprüche 7 bis 12, dadurch gekennzeichnet, daß von den ineinandergreifenden und im Querschnitt trapezförmigen Ausformungen (7) die Schenkel der innenliegenden Ausformung im Vergleich zur außenliegenden Ausformung steiler abgewinkelt sind.

14. Montageelement nach einem der Ansprüche 1 bis 13, dadurch gekennzeichnet, daß an dem Abstandhalter (3) zumindest zwei voneinander beabstandete Rohrschellen (4) oder dergleichen Befestigungselemente vorgesehen sind.

15. Montageelement nach einem der Ansprüche 1 bis 14, dadurch gekennzeichnet, daß der Haltefuß (2) des Montageelements (1) mit zumindest einer Rohrschelle oder dergleichen Befestigungsglied über wenigstens zwei voneinander beabstandete Abstandhalter (3) verbunden ist.

16. Montageelement nach einem der Ansprüche 1 bis 15, dadurch gekennzeichnet, daß die Materialstreifen (5, 6) des Abstandhalters (3) aus einem Metallblech hergestellt sind.

17. Montagelement nach einem der Ansprüche 1 bis 16, dadurch gekennzeichnet, daß dessen Haltefuß (2), mittels zumindest einer Spannkralle (14) an einem T-Träger oder dergleichen stegförmiger Unterlage (16) befestigt ist, daß die Spannkralle (14) einen auf der Unterlage (16) aufliegenden Stützabschnitt (15) hat, welcher (15) einstückig mit einem demgegenüber abgewinkelten, die Unterlage (16) hintergreifenden Klemmabschnitt (17) verbunden ist, und daß zumindest eine Spannkralle (14) aus einem Blechstreifen hergestellt ist, welcher zur Bildung des Stützabschnittes (15) in einem eine vorspringende Blechlasche (18) aufweisenden Mittelbereich etwa U-förmig umgebogen ist, wobei die freien, in Richtung zur Blechlasche (18) gebogenen und dabei mit ihren benachbarten Längsrändern zueinander nach innen eingedrehten Enden des Blechstreifens den Klemmabschnitt (17) bilden.

18. Montageelement nach Anspruch 17, dadurch gekennzeichnet, daß die freien Enden des die Spannkralle (14) bildenden Blechstreifens an ihren einander zugewandten Längsrändern miteinander verschweißt, verklebt oder dergleichen verbunden sind.

19. Montageelement nach Anspruch 17 oder 18, dadurch gekennzeichnet, daß zumindest ein Spannkrallen-Paar vorgesehen ist, dessen Spannkrallen (14) beidseits an der Unterlage (16) angreifen und die mittels eines Gewindestabes (21), einer Spannschraube oder dergleichen Spannelementes miteinander verbunden sind.

20. Montageelement nach einem der Ansprüche 17 bis 19, dadurch gekennzeichnet, daß eine der Spannkrallen (14) eines Spannkrallen-Paares mit dem Haltefuß (2) unverrückbar verbunden ist.

21. Montageelement nach einem der Ansprüche 17 bis 20, dadurch gekennzeichnet, daß am Haltefuß (2) des Montageelementes (1) zumindest ein Befestigungssteg (25) seitlich vorsteht, der als Widerlager für einen einander zugeordnete Spannkrallen (14) miteinander verbindenden Gewindestab, eine Spannschraube oder dergleichen Spannelement vorgesehen ist, und daß der Befestigungssteg (25) dazu wenigstens eine Durchstecköffnung hat, welche vom Spannelement (21) durchsetzt ist.

22. Montageelement nach Anspruch 21, dadurch gekennzeichnet, daß zumindest an zwei gegenüberliegenden Seiten des Haltefußes (2) ein Befestigungssteg (25) seitlich vorsteht.

23. Montageelement nach einem der Ansprüche 17 bis 22, dadurch gekennzeichnet, daß an jeder der Spannkrallen (14) eine Sicherungslasche (24) vorgesehen ist und daß der Haltefuß (2) zwischen der Unterlage (16) und den Sicherungslaschen (24) vorzugsweise in Längsrichtung verschieblich gehalten ist.

## Claims

1. Mounting element (1) having a retaining foot (2) which is connected to at least one pipe clamp (4) or similar fixing member via at least one spacer (3), the spacer (3) being formed by at least one strip of material (5, 6) in which at least one groove- or corrugation-like structure (7) oriented in the direction of support is integrally formed, characterised in that the spacer (3) consists of at least two strips of material (5, 6) overlapping in parts in the direction of support and each having at least one groove- or corrugation-like structure, in that the strips of material (5, 6) are movable relative to one another and their groove- or corrugation-like structures (7) are constructed for this purpose as longitudinal guides which interlock with one another, and in that the strips of material (5, 6) are joined together by at least one screw connection.

2. Mounting element according to claim 1, characterised in that the strips of material (5, 6) abut on one another at least in the region of their interlocking structures (7).

3. Mounting element according to claim 2, characterised in that the strips of material (5, 6) abut with their surfaces flat against one another.

4. Mounting element according to one of claims 1 to 3, characterised in that the screw connection(s) is (are) arranged in the region of the interlocking structures (7).

5. Mounting element according to one of claims 1 to 4, characterised in that, of the interlocking structures (7), a first structure has an oblong hole (8) oriented in the longitudinal direction of the structure, the second structure (7) has a through-opening (9) and a fixing screw passes through the oblong hole (8) and the through-opening (9).

6. Mounting element according to one of claims 1 to 5, characterised in that the structures (7) taper towards the outside.

7. Mounting element according to one of claims 1 to 6, characterised in that the structures (7) are in the form of a preferably equilateral trapezium in cross section.

8. Mounting element according to one of claims 1 to 7, characterised in that the interlocking structures (7) are shaped to be substantially complementary to one another in cross section.

9. Mounting element according to one of claims 1 to 8, characterised in that the interlocking structures (7) are joined together by at least one retaining profile (13) provided in the region of their contact zone.

10. Mounting element according to claim 9, characterised in that the retaining profile (13) is constructed as a serration preferably oriented at right angles to the longitudinal direction of the structures (7).

11. Mounting element according to one of claims 9 to 10, characterised in that the retaining profile(s) (13) is (are) arranged on the bases (12) of the interlocking structures (7) on their longitudinal sides facing one another.

12. Mounting element according to one of claims 9 to 11, characterised in that the retaining profile(s) (13) is (are) provided at the corner regions of the interlocking structures (7), adjacent to the bases (12) of the structures.

13. Mounting element according to one of claims 7 to 12, characterised in that, in the interlocking structures (7) which are trapezoidal in cross section, the sides of the inner structure are angled more sharply than those of the outer structure.

14. Mounting element according to one of claims 1 to 13, characterised in that at least two spaced-apart pipe clamps (4) or similar fixing members are provided on the spacer (3).

15. Mounting element according to one of claims 1 to 14, characterised in that the retaining foot (2) of the mounting element (1) is connected to at least one pipe clamp or similar fixing member via at least two spaced-apart spacers (3).

16. Mounting element according to one of claims 1 to 15, characterised in that the strips of material (5, 6) of the spacer (3) are made from sheet metal.

17. Mounting element according to one of claims 1 to 16, characterised in that the retaining foot (2) is secured to a T beam or similar web-like support (16) by means of at least one gripping claw (14), in that the gripping claw (14) has a support portion (15) resting on the support (16), said portion (15) being integrally connected with a clamping portion angled relative thereto and engaging under the support (16), and in that at least one gripping claw (14) is made from a strip of sheet metal which is bent round substantially in a U shape, in a central region having a protruding sheet-metal tongue (18), to form the support portion (15), whilst the free ends of the sheet-metal strip which are bent towards the sheet-metal tongue (18) and thus turned inwards with their adjacent longitudinal edges facing one another form the clamping portion (17).

18. Mounting element according to claim 17, characterised in that the free ends of the sheet-metal strip forming the gripping claw (14) are welded, adhesively bonded or otherwise joined together at their longitudinal edges facing one another.

19. Mounting element according to claim 17 or 18, characterised in that at least one pair of gripping claws is provided, the gripping claws (14) of which both act on the support (16) and which are joined together by means of a threaded rod (21), a tightening screw or similar clamping member.

20. Mounting element according to one of claims 17 to 19, characterised in that one of the gripping claws (14) of a pair of gripping claws is irreversibly connected to the retaining foot (2).

21. Mounting element according to one of claims 17 to 20, characterised in that projecting laterally from the retaining foot (2) of the mounting element (1) is at least one fixing web (25) which is provided as an abutment for a threaded rod joining associated gripping claws (14) together, a tightening screw or similar clamping member, and in that for this purpose the fixing web (25) has at least one through-opening through which the clamping member (21) passes.

22. Mounting element according to claim 21, characterised in that a fixing web (25) projects laterally at least on two opposite sides of the retaining foot (2).

23. Mounting element according to one of claims 17 to 22, characterised in that a securing tab (24) is provided on each of the gripping claws (14) and in that the retaining foot (2) is held between the support (16) and the securing tabs (24), preferably so as to be movable in the longitudinal direction.

## Revendications

1. Elément de montage (1) comportant une embase de retenue (2) reliée, par l'intermédiaire d'au moins une pièce d'espacement (3), à au moins un collier de serrage (4) ou organe de fixation similaire, la pièce d'espacement (3) étant formée d'au moins une bande de matériau (5, 6) dans laquelle est ménagée, d'un seul tenant, au moins une empreinte saillante (7) en forme de rainure ou de moulure orientée dans la direction de support, caractérisé par le fait que la pièce d'espacement (3) est formée d'au moins yeux bandes de matériau (5, 6) se chevauchant par zones dans la direction de support et présentant, à chaque fois, au moins une empreinte saillante en forme de rainure ou de moulure ; par le fait que les bandes de matériau (5, 6) sont mobiles l'une par rapport à l'autre et leurs empreintes saillantes (7) en forme de rainures ou de moulures sont réalisées, à cet effet, en tant que guides longitudinaux s'interpénétrant ; et par le fait que les bandes de matériau (5, 6) sont reliées l'une à l'autre à l'aide d'au moins une solidarisation boulonnée.

2. Elément de montage selon la revendication 1, caractérisé par le fait que les bandes de matériau (5, 6) sont mutuellement en applique, au moins dans la région de leurs empreintes saillantes (7) s'interpénétrant.

3. Elément de montage selon la revendication 2, caractérisé par le fait que les bandes de matériau (5, 6) sont appliquées l'une contre l'autre par toute leur superficie.

4. Elément de montage selon l'une des revendications 1 à 3, caractérisé par le fait que la (les) solidarisation(s) boulonnée(s) se trouve(nt) dans la région des empreintes saillantes (7) s'interpénétrant.

5. Elément de montage selon l'une des revendications 1 à 4, caractérisé par le fait que, parmi les empreintes saillantes (7) s'interpénétrant, une première empreinte saillante présente un trou oblong (8) orienté dans la direction longitudinale de ladite empreinte saillante ; par le fait que la seconde empreinte saillante (7) comporte un orifice d'emboîtement (9) ; et par le fait qu'une vis de serrage (10) traverse le trou oblong (8) et l'orifice d'emboîtement (9).

6. Elément de montage selon l'une des revendications 1 à 5, caractérisé par le fait que les empreintes saillantes (7) se rétrécissent dans la direction tournée vers l'extérieur.

7. Elément de montage selon l'une des revendications 1 à 6, caractérisé par le fait que les empreintes saillantes (7) revêtent, en coupe transversale, la forme d'un trapèze préférentiellement équilatéral.

8. Elément de montage selon l'une des revendications 1 à 7, caractérisé par le fait que les empreintes saillantes (7) s'interpénétrant possèdent, en coupe transversale, des configurations pour l'essentiel mutuellement complémentaires.

9. Elément de montage selon l'une des revendications 1 à 8, caractérisé par le fait que les empreintes saillantes (7), s'interpénétrant, sont solidarisées à l'aide d'au moins un profilage de retenue (13) disposé dans la région de leur zone de contact.

10. Elément de montage selon la revendication 9, caractérisé par le fait que le profilage de retenue (13) est réalisé sous la forme d'une denture orientée, de préférence, transversalement par rapport à la direction longitudinale des empreintes saillantes (7).

11. Elément de montage selon l'une des revendications 9 à 10, caractérisé par le fait que le (les) profilage(s) de retenue (13) est (sont) disposé(s) au fond (12) des empreintes saillantes (7) s'interpénétrant, sur les côtés longitudinaux de ces dernières qui se font mutuellement face.

12. Elément de montage selon l'une des revendications 9 à 11, caractérisé par le fait que le (les) profilage(s) de retenue (13) est (sont) prévu(s) dans les zones d'angle des empreintes saillantes (7) s'interpénétrant, lesdites zones délimitant respectivement le fond (12) desdites empreintes saillantes.

13. Elément de montage selon l'une des revendications 7 à 12, caractérisé par le fait que, parmi les empreintes saillantes (7) s'interpénétrant et dotées d'une section transversale trapézoïdale, les branches de l'empreinte saillante située à l'intérieur sont coudées de manière plus accentuée comparativement à l'empreinte saillante située à l'extérieur.

14. Elément de montage selon l'une des revendications 1 à 13, caractérisé par le fait qu'au moins deux colliers de serrage (4) ou éléments de fixation similaires, distants l'un de l'autre, sont prévus sur la pièce d'espacement (3).

15. Elément de montage selon l'une des revendications 1 à 14, caractérisé par le fait que l'embase de retenue (2) dudit élément de montage (1) est reliée à au moins un collier de serrage, ou organe de fixation similaire, par l'intermédiaire d'au moins deux pièces d'espacement (3) distantes l'une de l'autre.

16. Elément de montage selon l'une des revendications 1 à 15, caractérisé par le fait que les bandes de matériau (5, 6) de la pièce d'espacement (3) sont produites à partir d'une tôle métallique.

17. Elément de montage selon l'une des revendications 1 à 16, caractérisé par le fait que l'embase de retenue (2) dudit élément est fixée, à l'aide d'au moins une griffe de serrage (14), à un support en T ou structure sous-jacente similaire (16) en forme de membrure ; par le fait que la griffe de serrage (14) présente un segment d'appui (15) reposant sur la structure sous-jacente (16), ledit segment (15) étant relié, d'un seul tenant, à un segment de coincement (17) coudé par rapport au segment précité et emprisonnant la structure sous-jacente (16) ; et par le fait qu'au moins une griffe de serrage (14) est produite à partir d'un ruban de tôle qui, en vue de former le segment d'appui (15), est sensiblement cintré en U dans une région centrale munie d'une patte en tôle (18) saillante, le segment de coincement (17) étant formé par les extrémités libres dudit ruban de tôle qui sont coudées en direction de la patte (18) en tôle et sont alors rabattues, vers l'intérieur, en se faisant face par leurs bords longitudinaux voisins.

18. Elément de montage selon la revendication 17, caractérisé par le fait que les extrémités libres du ruban de tôle, qui forme la griffe de serrage (14), sont reliées mutuellement par soudage, par collage ou d'une manière similaire sur leurs bords longitudinaux se faisant face.

19. Elément de montage selon la revendication 17 ou 18, caractérisé par le fait qu'il est prévu au moins une paire de griffes de serrage dont les griffes de serrage (14) viennent en prise, de part et d'autre, avec la structure sous-jacente (16) et sont reliées l'une à l'autre au moyen d'une tige filetée (21), d'une vis de serrage ou d'un élément de serrage similaire.

20. Elément de montage selon l'une des revendications 17 à 19, caractérisé par le fait que l'une des griffes de serrage (14) d'une paire de griffes de serrage est reliée, de manière indéplaçable à l'embase de retenue (2).

21. Elément de montage selon l'une des revendications 17 à 20, caractérisé par le fait qu'au moins une membrure de fixation (25), dépassant latéralement au-delà de l'embase de retenue (2) dudit élément de montage (1), est prévue en tant que contre-butée affectée à une tige filetée, à une vis de serrage ou à un élément de serrage similaire solidarisant des griffes de serrage (14) mutuellement associées ; et par le fait que la membrure de fixation (25) présente, à cette fin, au moins un orifice d'emboîtement traversé par ledit élément de serrage (21).

22. Elément de montage selon la revendication 21, caractérisé par le fait qu'une membrure de fixation (25) dépasse latéralement au-delà d'au moins deux côtés opposés de l'embase de retenue (2).

23. Elément de montage selon l'une des revendications 17 à 22, caractérisé par le fait qu'une patte d'arrêt (24) est prévue sur chacune des griffes de serrage (14) ; et par le fait que l'embase de retenue (2) est maintenue entre la structure sous-jacente (16) et les pattes d'arrêt (24), de préférence avec faculté de coulissement dans le sens longitudinal.
